# EUROPEAN PATENT APPLICATION

(11) **EP 2 642 690 A1**
(43) Date of publication of application: **25.09.2013**
(21) Application number: 13275077.9
(22) Date of filing: 22.03.2013
(51) Int. Cl.: H04L 12/14, H04L 12/28, H04L 12/911

(54) **Single operator managed policy and charging function for fixed mobile convergence networks**

(30) Priority: 22.03.2012 US 201261614434 P
(71) Applicant: ZTE Corporation, Nanshan District Shenzhen 518057 (CN); ZTE (USA) Inc., Morristown, NJ 07960 (US)
(72) Inventor: So, Tricci, San Diego, CA (US); Bi, Yifeng, Ng 210012 (CN); Zong, Zaifeng, Nanjing 210012 (CN); Zhou, Xiaoyun, Nanjing 210012 (CN)
(74) Representative: Potter Clarkson LLP

(57) **Abstract**

Systems, devices and techniques for policy and charging rule function that is responsive to the access network used by a user equipment include receiving policy enforcement information for operation of a user equipment (UE) from a policy and charging rule function-plus (PCRF+) in the FMC system; the policy enforcement information being based on an access technology used by the UE and enforcing a service policy based on the received policy enforcement information.

## Description

### CROSS REFERENCE TO RELATED APPLICATIONS

This patent document claims the benefit of priority of U.S. Provisional Patent Application No. 61/614,434, filed on March 22, 2012. The entire content of the beforementioned patent application is incorporated by reference herein.

### TECHNICAL FIELD

This patent document relates to a converged policy and charging control architecture to support fixed and mobile network convergence (FMC) operated and managed by a single operator.

### BACKGROUND

With the exponential growth of the mobile services and data volume against competitive charging model, many operators are focusing more on reducing costs by optimizing their network performance without sacrificing the quality of service that is demanded by their next generation mobile services.

As part of this transformation, operators running both fixed and mobile accesses recognized their competitive advantages over other FMC deployment operated by heterogeneous operators is by offering ubiquitous and high quality end-to-end and personalized mobile services across fixed and mobile transport media.

The fundamental building block to optimize end-to-end network performance when enabling high quality multimedia services and still able to ensure the consistent policy enforcement and accurate charging collection is by deploying a converged policy and charging network solution over such FMC network.

Techniques are needed for improved broadband access session management in a single-operator managed networks.

### SUMMARY

This patent document provides, among others, a converged policy and charging control architecture to support the above network solution requirement.

In one aspect, methods, apparatus and computer program products for facilitating operation of a fixed mobile convergence (FMC) system implemented at a broadband network gateway include receiving policy enforcement information for operation of a user equipment (UE) from a policy and charging rule function-plus (PCRF+) in the FMC system, the policy enforcement information being based on an access technology used by the UE, and enforcing a service policy based on the received policy enforcement information.

In another aspect, methods, apparatus and computer program products for facilitating the operation of a FMC network includes obtaining information about an access network associated with a UE, and communicating a policy and charging rule, based on the obtained information about the access network.

This and other aspects and their implementations are described in greater detail in the drawings, the description and the claims.

### BRIEF DESCRIPTION OF DRAWINGS

FIG. 1 is a block diagram representation of a wireless communications network.

FIG. 2 is a block diagram representation of a wireless communications device.

FIG. 3 illustrates a network architecture depicting PCRF+ integration with a conventional Non-roaming FMC network architecture.

FIG. 4 illustrates a network architecture depicting PCRF+ integration with a conventional home-routed Roaming FMC network architecture.

FIG. 5 illustrates a network architecture depicting PCRF+ integration with a conventional Local Breakout FMC network architecture.

FIG. 6 is a flow chart representation of a process of facilitating operation of a fixed mobile convergence (FMC) system implemented at a broadband network gateway.

FIG. 7 is a block diagram representation of an apparatus for facilitating operation of a fixed mobile convergence (FMC) system.

FIG. 8 is a flow chart representation of a process of facilitating operation of a fixed mobile convergence (FMC) network.

FIG. 9 is a block diagram representation of an apparatus for facilitating operation of a fixed mobile convergence (FMC) network.

### DETAILED DESCRIPTION

This patent document discloses techniques that, in one aspect, are useful for operating a policy and charging control function based on awareness of the access technology used by user equipment. In some embodiments, the disclosed techniques are implementable in fixed mobile convergence (FMC) networks using existing interface protocols.

The below-provided description includes terms that are generally consistent with the following two documents, the relevant portion of both of which is incorporated by reference in the present document: (1) 3GPP TS 23.139: "3GPP system - fixed broadband access network interworking" and (2) 3GPP TS 23.402: "Architecture Enhancement for non-3GPP Access."

The usefulness of a fully "converged" policy and charging control network solution in single operator managed FMC deployment are as follows:

Today, the policy control function (PCF) at the 3GPP mobile core network is access technology agnostic in general, hence, it is difficult to enforce end-to-end QoS and consistent charging to its subscriber if the fixed access network does not allocate sufficient resource to sustain the QoS performance.

Today, in a typical mobile network, such as a 3GPP access network, the mobile policy control used is typically the network policy in the 3GPP mobile access network on the resource management. Therefore, as the mobile subscriber is moving between fixed and mobile access networks, the same network policy on the resource management for mobile access network is applied to the fixed access network. As a result, user equipment (UE) can access to the same services over either the fixed or mobile access network or both at the "same" time.

Today, many of the FMC operators are also offering Mobile Virtual Network Operator (MVNO) services. In order to support different MVNOs over the same physical network, there is a need for the FMC operators to guarantee their Service Level Agreements (SLAs) for their MVNOs to share the network resources fairly so that their MVNOs can also guarantee their relative SLAs for their subscribers.

As can be appreciated, such a policy and charging control may not be accurate and may ultimately result in failure in meeting QoS offered to a user.

Therefore, there is a need to consolidate the network resource utilization for a given UE over the fixed and mobile access network for the purpose of per-user subscription policy enforcement by its serving MVNO.

However, for the FMC deployment, a given mobile user could be associated with multiple policy control functions that support different types of services over the fixed and mobile access networks. Today, there is no aggregation policy control function in the 3GPP mobile core network to oversee the total resource allocation for a given mobile user accessing to both fixed and mobile access networks corresponding to the user's subscription.

Hence, the policy control and charging functions in the mobile core network can be enhanced to support the aggregation of the access network resource admission control and allocation.

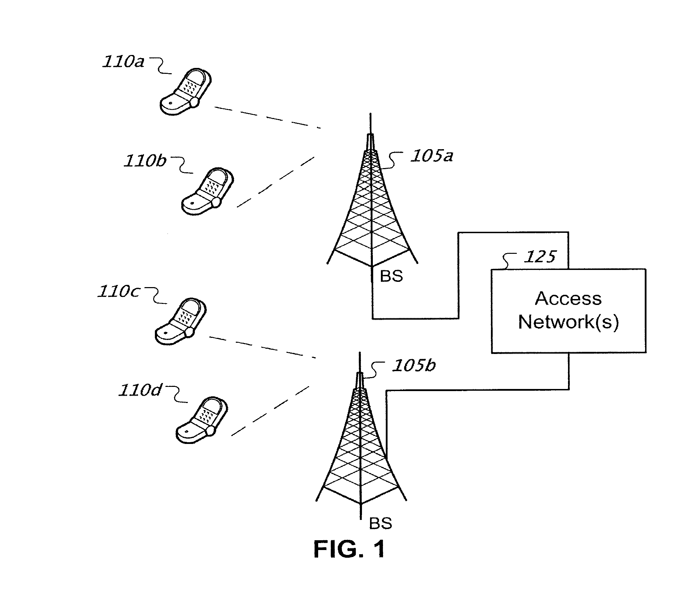

FIG. 1 shows an example of a wireless communication system. A wireless communication system can include one or more base stations (BSs) 105a, 105b, one or more wireless devices 110a, 110b, 110c, 110d, and an access network 125. A base station 105a, 105b can provide wireless service to wireless devices 110a, 110b, 110c and 110d in one or more wireless sectors. In some implementations, a base station 105a, 105b includes directional antennas to produce two or more directional beams to provide wireless coverage in different sectors.

The access network 125 can communicate with one or more base stations 105a, 105b. In some implementations, the access network 125 includes one or more base stations 105a, 105b. In some implementations, the access network 125 is in communication with a core network (not shown in FIG. 1) that provides connectivity with other wireless communication systems and wired communication systems. The core network may include one or more service subscription databases to store information related to the subscribed wireless devices 110a, 110b, 110c and 110d. A first base station 105a can provide wireless service based on a first radio access technology, whereas a second base station 105b can provide wireless service based on a second radio access technology. The base stations 105a and 105b may be co-located or may be separately installed in the field according to the deployment scenario. The access network 125 can support multiple different radio access technologies.

Various examples of wireless communication systems and access networks that can implement the present techniques and systems include, among others, wireless communication systems based Code division Multiple Access (CDMA) such as CDMA2000 1x, High Rate Packet Data (HRPD), evolved HRPD (eHRPD), Universal Mobile Telecommunications System (UMTS), Universal Terrestrial Radio Access Network (UTRAN), Evolved UTRAN (E-UTRAN), Long-Term Evolution (LTE), and Worldwide Interoperability for Microwave Access (WiMAX). In some implementations, a wireless communication system can include multiple networks using different wireless technologies. A dual-mode or multi-mode wireless device includes two or more wireless technologies that could be used to connect to different wireless networks. In some implementations, a wireless device can support Simultaneous Voice-Data Operation (SV-DO).

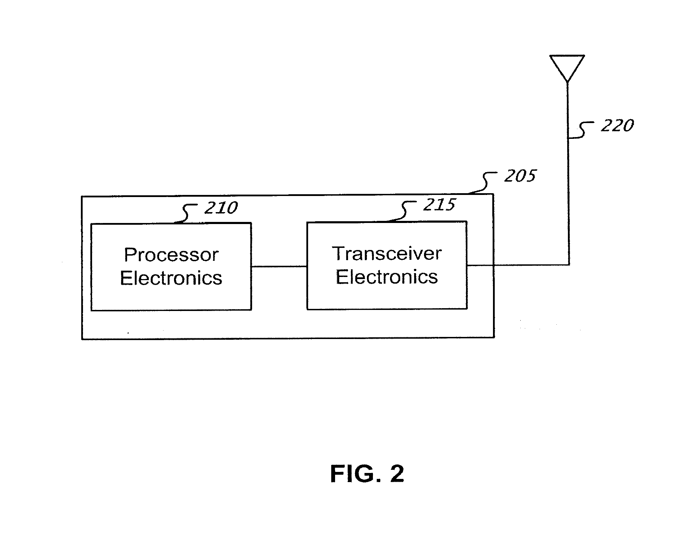

FIG. 2 is a block diagram representation of a portion of a radio station 205. A radio station 205 such as a base station or a wireless device (e.g., user equipment UE) can include processor electronics 210 such as a microprocessor that implements one or more of the wireless techniques presented in this document. The radio station 205 can include transceiver electronics 215 to send and/or receive wireless signals over one or more communication interfaces such as antenna 220. The radio station 205 can include other communication interfaces for transmitting and receiving data. Radio station 205 can include one or more memories configured to store information such as data and/or instructions. In some implementations, the processor electronics 210 can include at least a portion of the transceiver electronics 215. It will be appreciated that the disclosed techniques may be implemented to execute on the radio station 205.

In order to support a true converged policy and charging support for single operator managed FMC network when addressing the problems as described above, this invention proposes to enhance the existing 3GPP mobile core network's policy and charging rules function (PCRF) with the added PCRF+ function in the Enhanced Packet Core (EPC) of the mobile core network.

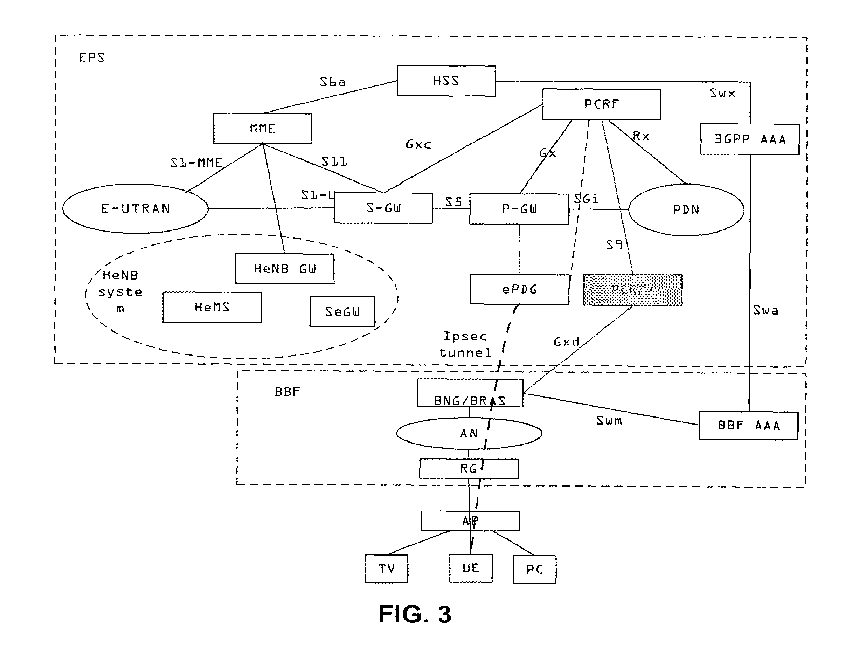

FIG. 3, FIG. 4 and FIG. 5 depict the overall network architecture for adding the PCRF+ function to the mobile core network (i.e. EPC) for the non-roaming scenario, roaming and offload scenarios respectively.

FIG. 3 depicts a network architecture in which PCRF+ (described in greater detail below) is separately located in an enhanced packet core network than the PCRF. As can be seen in FIG. 3, the existing interface S9 can be used for communication between PCRF and PCRF+. Both the PCRF and the PCRF+ functions are located in the same EPS. Furthermore, a new interface Gxd can be used for communication between PCRF+ and BNG/BRAS that is located in the fixed network (BBF, in this case).

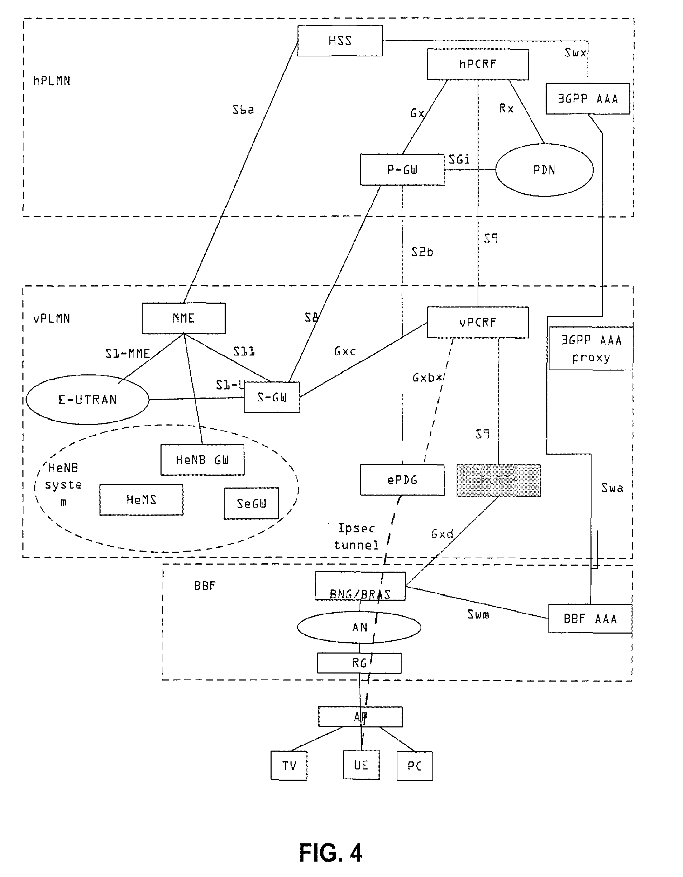

FIG. 4 depicts network architecture in the scenario where the PCRF+ is separately located from the PCRF, but is in a visited network to which the UE is connected via the BBF. In this scenario, PCRF+ interfaces with the visited PCRF over the S9 interface.

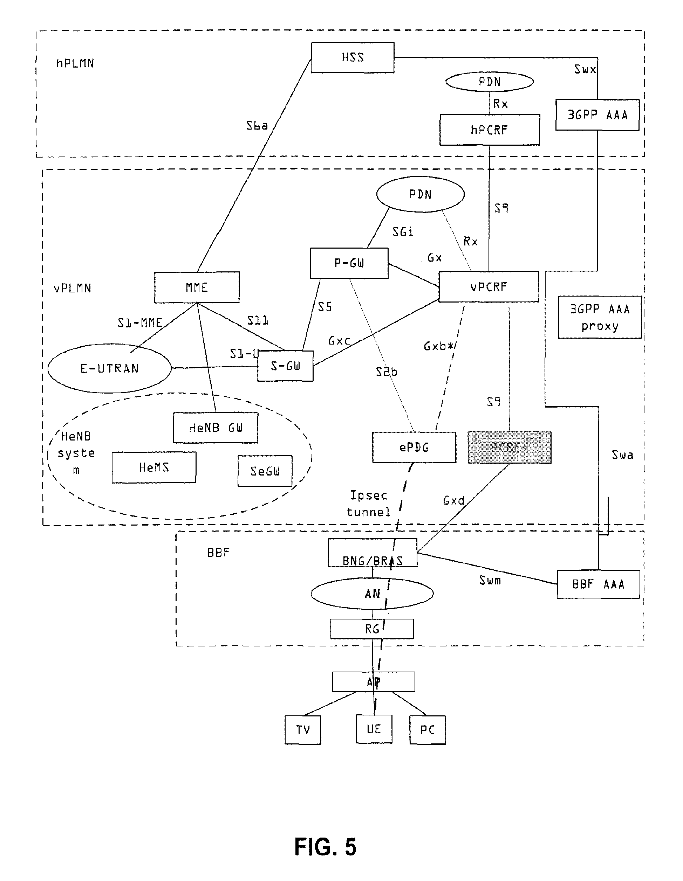

FIG. 5 depicts a network architecture in which the PCRF+ is in a visited PLMN (vPLMN) and is separately located from the PCRF function of the visited network. However, in contrast to the architecture depicted in FIG. 4, in FIG. 5, the PDN is also located in the visited network. In other words, in the architecture depicted in FIG. 5, data traffic from UE need not go through the home PLMN, but could go straight to the Internet from the vPLMN.

Just as the PCRF, the PCRF+ also takes into account of the user's access profile to provide the resource management and admission control for the fixed access network. However, the existing PCRF manages the aggregation network's resources for a given subscriber and PCRF is access technology agnostic, whereas the added PCRF+ manages the aggregation of the fixed network's resources for a given subscriber which is access technology aware. By taking this approach, the function of the PCRF+ addresses the previously discussed shortcomings of today's deployment. Various access technologies are well known in the art and the detailed description of access technologies such as WiMax, 3GPP, Wi-Fi (802.11), Digital Subscriber Loop (DSL) and cable modem are omitted in this document for brevity.

As a non-limiting example of how the PCRF+ can take into account access technology, for example, the PCRF+ may maintain QoS policies used in different access networks, bandwidth availability, spectral efficiency, a cost associated with every bit or byte of data transfer for each access technology, latency, delay, jitter in each access technology, and so on.

The PCRF+ function could be co-located with or separated from the PCRF. In the case when the PCRF and PCRF+ are physically separated, the existing S9 interface that is used to support the Home PCRF and the Visiting PCRF can be reused to interconnect PCRF with PCRF+. As a result, for a given user subscription over a FMC network, the PCRF together with PCRF+ provide a consolidated policy control support.

In the case of roaming, the PCRF+ is a part of the visiting mobile core network (e.g. Visiting PLMN).

In one aspect, the techniques disclosed in this document can be implemented with a minimum impact to the existing Policy Control and Charging (PCC) architecture framework with a simple extension to support true fixed mobile convergence support on policy and charging.

In some implementations, a dedicated PCRF+ is assigned to the fixed broadband network gateway (BNG) to serve a given subscriber (i.e. one-to-one mapping between PCRF+ and BNG). In the case when the PCRF+ is geographically separated from the PCRF, the PCRF can locate the serving PCRF+ for a given subscriber via the possible venues as described next.

PCRF+ Selection and Discovery by PCRF

In some configurations, the Home PCRF (H-PCRF for non-roaming case) and the Visiting PCRF (V-PCRF for home routed and visited access roaming cases) as well as possible the Home or Visiting Diameter Routing Agent (H-DRA or V-DRA) are configured with IP address range mappings of the fixed broadband access network entry point {(IPx..IPy) -> fixed broadband access network entry point}. The PCRF (for non-roaming) and the V-PCRF (for roaming cases) selects the correct fixed broadband access network entry point based on the following two main different network deployment scenarios:

(A) UE attachment to WLAN over the fixed broadband access network

In this scenario (A), the mobile device's (i.e. UE's) Local IP address, received from the Policy Control Enforcement Function (PCEF) or from the Bearer Binding and Event Reporting Function (BBERF) in the ePDG for WLAN access is used. The former choice is used when the UE is on a trusted connection, while the latter is used when the UE is on an un-trusted connection.

(B) UE attachment to H(e)NB's (i.e. 3GPP Femto Access Point's) over the fixed broadband access network

In this scenario (B), the H(e)NB's Local IP address and/or FQDN of fixed broadband access network, if available, received from the PCEF or from the BBERF in the S-GW for H(e)NB case.

In the roaming case, the H-PCRF sends the H(e)NB's or UE's local IP address to the V-PCRF over the S9 interface. Such local IP address information can then be used to identify the corresponding PCRF+ via local provisioning or dynamically (i.e. via the support of Diameter Routing Agent). The approach of which of these two methods to be used can be a local network implementation decision.

For WLAN and H(e)NB in Home Routed roaming case as well as the H(e)NB local breakout case, H-PCRF finds Visiting DRA (V-DRA) according to the Visiting Mobile Network's ID (i.e. V-PLMN ID) if received via Gx session, and then discovers V-PCRF by V-DRA. V-PCRF selects the correct fixed broadband access network entry point with the given UE's local IP address and H(e)NB's Local IP address and/or FQDN of fixed broadband access network at which the H(e)NB is connected to respectively.

For the WLAN and H(e)NB fixed broadband access offloading scenario and if the UE's serving PCRF is not co-located with the PCRF+, since there is always one-to-one mapping between the PCRF+ and the BNG, the designated PCRF+ will be automatically identified by the fixed broadband access network towards the UE's serving PCRF.

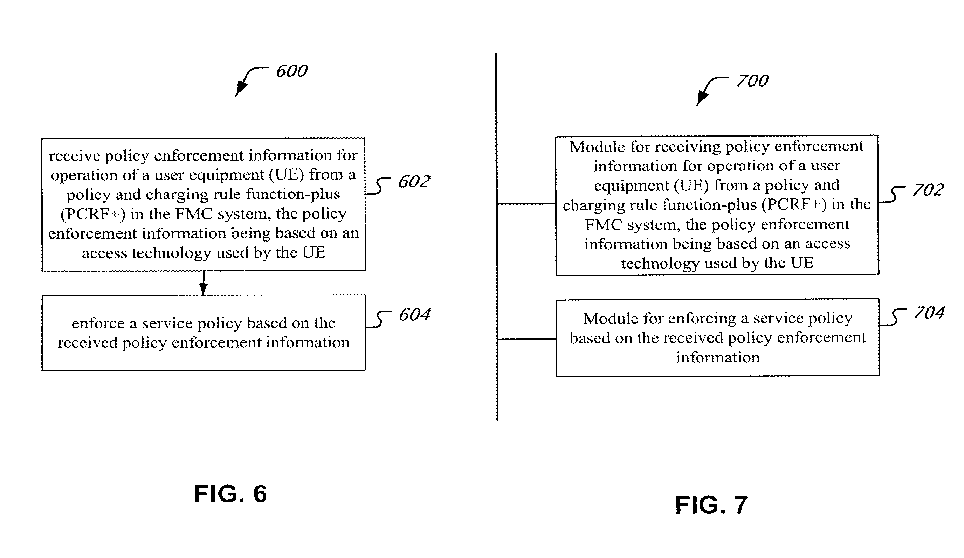

FIG. 6 is a flow chart representation of a process 600 of facilitating operation of a fixed mobile convergence (FMC) system implemented at a broadband network gateway. At 602, policy enforcement information for operation of user equipment (UE) is received from a policy and charging rule function-plus (PCRF+) in the FMC system, the policy enforcement information being based on an access technology used by the UE. At 604, a service policy based on the received policy enforcement information is enforced.

FIG. 7 is a block diagram representation of a portion of an apparatus 700 for facilitating operation of a fixed mobile convergence (FMC) system at a broadband network gateway. The module 702 is for receiving policy enforcement information for operation of a user equipment (UE) from a policy and charging rule function-plus (PCRF+) in the FMC system, the policy enforcement information being based on an access technology used by the UE. The module 704 is for enforcing a service policy based on the received policy enforcement information. The apparatus 700 and modules 702, 704 may further be configured to implement one or more techniques discussed in this document.

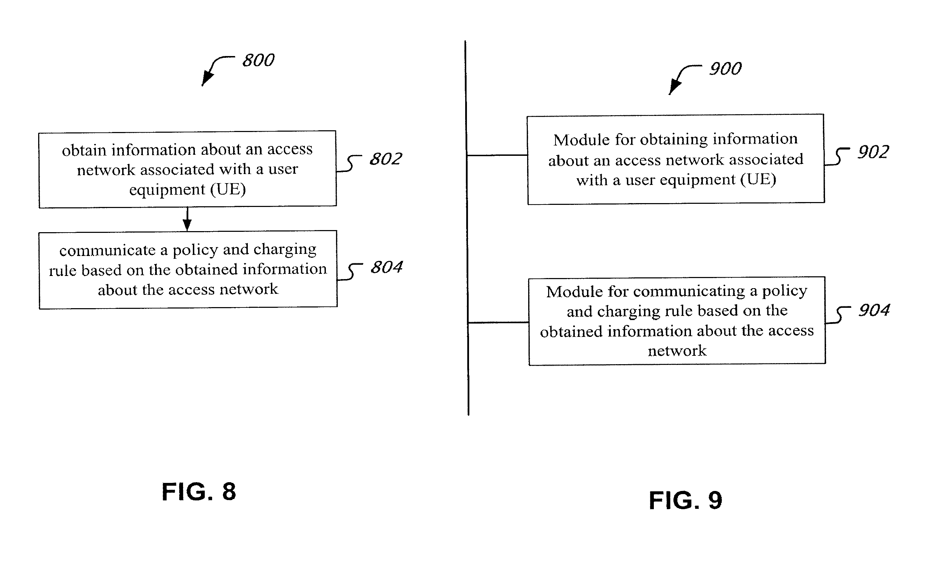

FIG. 8 is a flow chart representation of a process 800 of facilitating operation of a fixed mobile convergence (FMC) network. At 802, information about an access network associated with a user equipment (UE) is obtained. At 804, a policy and charging rule based on the obtained information about the access network is communicated.

FIG. 9 is a block diagram representation of a portion of apparatus 900 for facilitating operation of a fixed mobile convergence (FMC) network. The module 902 is for obtaining information about an access network associated with a user equipment (UE). The module 904 is for communicating a policy and charging rule based on the obtained information about the access network. The apparatus 900 and modules 902, 904 may further be configured to implement one or more techniques discussed in this document.

It will be appreciated that techniques are describe for enforcing PCRF with plus or enhanced capabilities. In some implementations, the enhanced capabilities include the use of access technology information for policy enforcement for a UE operating in a network. In one aspect, the use of access-technology dependent PCRF function enables precise and uniform QoS to a UE which is operating in a single operator's fixed mobile convergence (FMC) system.

The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A method of facilitating operation of a fixed mobile convergence (FMC) system implemented at a broadband network gateway, the method comprising:
receiving policy enforcement information for operation of a user equipment (UE) from a policy and charging rule function-plus (PCRF+) in the FMC system, the policy enforcement information being based on an access technology used by the UE; and
enforcing a service policy based on the received policy enforcement information.

2. The method of claim 1, wherein the PCRF+ is implemented as a same network location as a conventional policy and charging rule function (PCRF).

3. The method of claim 1, wherein the PCRF+ is implemented at a different location than a location where a conventional PCRF is implemented.

4. The method of claim 3, further comprising:
communicating between the PCRF+ and the PCRF over an S9 interface.

5. A network-side apparatus for facilitating operation of a fixed mobile convergence (FMC) system; comprising:
a receiver that receives policy enforcement information for operation of a user equipment (UE) from a policy and charging rule function-plus (PCRF+) in the FMC system, the policy enforcement information being based on an access technology used by the UE; and
a policy enforcer that enforces a service policy based on the received policy enforcement information.

6. The apparatus of claim 5, wherein the PCRF+ is implemented as a same network location as a conventional policy and charging rule function (PCRF).

7. The apparatus of claim 5, wherein the PCRF+ is implemented at a different location than a location where a conventional PCRF is implemented.

8. The apparatus of claim 7, further comprising:
a first communicator that communicates with the PCRF+ on an interface; and
a second communicator that communicates with the PCRF on a different interface.

9. A computer program product comprising a computer-readable medium having code stored thereon, the code, when executed by a processor, causing the processor to implement a method of facilitating operation of a fixed mobile convergence (FMC) system implemented at a broadband network gateway; the method comprising:
receiving policy enforcement information for operation of a user equipment (UE) from a policy and charging rule function-plus (PCRF+) in the FMC system, the policy enforcement information being based on an access technology used by the UE; and
enforcing a service policy based on the received policy enforcement information.

10. An apparatus for facilitating operation of a fixed mobile convergence (FMC) system at a broadband network gateway; comprising:
means for receiving policy enforcement information for operation of a user equipment (UE) from a policy and charging rule function-plus (PCRF+) in the FMC system, the policy enforcement information being based on an access technology used by the UE; and
means for enforcing a service policy based on the received policy enforcement information.

11. A method of facilitating operation of a fixed mobile convergence (FMC) network, the method comprising:
obtaining information about an access network associated with a user equipment (UE); and
communicating a policy and charging rule based on the obtained information about the access network.

12. The method of claim 11 wherein the policy and charging rule is responsive to one or more of a jitter, a latency, a bandwidth efficiency, and a quality of service metric of the access network.

13. An apparatus for facilitating operation of a fixed mobile convergence (FMC) network; the apparatus comprising:
means for obtaining information about an access network associated with a user equipment (UE); and
means for communicating a policy and charging rule based on the obtained information about the access network.

14. The apparatus of claim 13 wherein the policy and charging rule is responsive to one or more of a jitter, a latency, a bandwidth efficiency, and a quality of service metric of the access network.

15. A computer program product comprising a computer-readable medium having code stored thereon, the code, when executed by a processor, causing the processor to implement a method according to claim 11 or claim 12.
